# EUROPÄISCHE PATENTSCHRIFT

(11) **EP 3 298 436 B1**
(45) Veröffentlichungstag und Bekanntmachung des Hinweises auf die Patenterteilung: **30.12.2020**
(21) Anmeldenummer: 16725100.8
(22) Anmeldetag: 20.05.2016
(51) Int. Cl.: G01T 1/175, G01T 1/20

(54) **RADIOMETRISCHES MESSGERÄT**
RADIOMETRIC APPARATUS
APPAREIL DE MESURE RADIOMÉTRIQUE

(30) Priorität: 21.05.2015 DE 102015209366
(43) Veröffentlichungstag der Anmeldung: 28.03.2018
(73) Patentinhaber: Berthold Technologies GmbH & Co. KG, 75323 Bad Wildbad (DE)
(72) Erfinder: MÜLLER, Steffen, 75173 Pforzheim (DE); FREIBURGER, Ewald, 75245 Neulingen (DE); DAIBENZEIHER, Tobias, 75217 Birkenfeld (DE)
(74) Vertreter: Patentanwälte Ruff, Wilhelm, Beier, Dauster & Partner mbB
(86) Internationale Anmeldenummer: PCT/EP2016/061469
(87) Internationale Veröffentlichungsnummer: WO 2016/185028

(56) Entgegenhaltungen:
- EP-A2- 1 860 513
- WO-A1-2015/090765
- DE-A1-102007 053 860
- DE-A1-102013 005 226
- KR-A- 20140 041 041

## Beschreibung

Die Erfindung betrifft ein radiometrisches Messgerät.

Herkömmliche radiometrische Messgeräte, beispielsweise zur Füllstand- oder Dichtemessung, die ihre Mess- oder Prozesswerte über eine Stromschnittstelle bzw. einen Stromausgang (4-20 mA) signalisieren, benötigen aufgrund ihres vergleichsweise hohen Energiebedarfs eine Energieversorgung, die von der Stromschnittstelle bzw. dem Stromausgang getrennt ist.

Die DE 10 2007 053 860 A1 zeigt ein radiometrisches Messgerät, das über ein Leitungspaar verfügt, wobei über das Leitungspaar die Energieversorgung des Messgeräts erfolgt und die Übertragung eines Messsignals erfolgt.

Die DE 10 2013 005 226 A1 zeigt ein Messgerät mit einer Schnittstelle zum Übertragen von Energie und/oder Signalen.

Die WO 2015/090765 A1 zeigt ein radiometrisches Messgerät zur Ausführung von Messungen in explosionsgefährdeten Bereichen.

Die EP 1 860 513 A2 zeigt eine Schaltung zur sicheren Übermittlung eines analogen Signalwerts mit einer Stromschnittstelle.

Der Erfindung liegt die Aufgabe zugrunde, ein radiometrisches Messgerät zur Verfügung zu stellen, das möglichst flexibel einsetzbar ist.

Der Erfindung löst diese Aufgabe durch ein radiometrisches Messgerät nach Anspruch 1.

Das radiometrische Messgerät kann beispielsweise ein radiometrischer Szintillationsdetektor zum Nachweis von Gamma- oder Neutronenstrahlung für die Füllstand- oder Dichtemessung in der Prozessindustrie sein.

Das radiometrische Messgerät weist einen oder mehrere herkömmliche Szintillatoren auf. Insoweit sei auch auf die einschlägige Fachliteratur verwiesen.

Das radiometrische Messgerät weist weiter eine oder mehrere Halbleiter-Photodioden auf, wobei die Halbleiter-Photodiode(n) optisch mit dem oder den Szintillatoren gekoppelt ist/sind.

Das radiometrische Messgerät weist weiter eine Signalauswerteeinheit auf, beispielsweise in Form eines Mikroprozessors und/oder Signalprozessors. Die Signalauswerteeinheit ist mit der mindestens einen Halbleiter-Photodiode elektrisch gekoppelt. Die Signalauswerteeinheit ist dazu ausgebildet, in Abhängigkeit von einem Messsignal, beispielsweise in Form von Messpulsen, das von der mindestens einen Halbleiter-Photodiode erzeugt wird, insbesondere fortlaufend (kontinuierlich) und messpausenfrei, eine Messgröße zu ermitteln. Hierzu kann beispielsweise eine Zählrate von Impulsen ermittelt werden, die mittels der Halbleiter-Photodiode erzeugt werden, wobei basierend auf der Zählrate ein Füllstand, eine Dichte, etc. berechnet wird. Insoweit sei auch auf die einschlägige Fachliteratur verwiesen. Insbesondere ist das radiometrische Messgerät dazu ausgebildet, fortlaufend und messpausenfrei zu messen.

Bei der Messgröße kann es sich beispielsweise um einen Füllstand, die Dichte und/oder um einen Massenstrom handeln. Die Messgröße wird bevorzugt unmittelbar im radiometrischen Messgerät selbst ermittelt, d.h. es werden nicht lediglich Zwischenmessgrößen ermittelt, die dann im Empfänger zum Bestimmen der Messgröße verwendet werden.

Das radiometrische Messgerät weist weiter eine elektrische Schnittstelle auf, wobei das radiometrische Messgerät mittels der bzw. über die Schnittstelle mit mindestens einem Empfänger zum unidirektionalen oder bidirektionalen Datenaustausch koppelbar ist. Über die Schnittstelle kann beispielsweise die Messgröße bzw. deren Wert zu dem Empfänger übertragen werden. Auf der Schnittstelle steht im Betrieb elektrische Schnittstellenenergie zur Verfügung, die beispielsweise vom Empfänger in die Schnittstelle eingespeist wird, indem dieser beispielsweise eine Spannung oder einen Strom einprägt.

Das radiometrische Messgerät ist dazu ausgebildet, ausschließlich über seine Schnittstelle mit elektrischer Energie versorgt zu werden. Mit anderen Worten wird das radiometrische Messgerät ausschließlich über die Schnittstelle mit elektrischer (Betriebs-) Energie versorgt. Weitere Energieversorgungen, beispielsweise in Form von dedizierten Netzteilen, fehlen.

Das radiometrische Messgerät kann eine Spannungsversorgungseinrichtung aufweisen, wobei die Spannungsversorgungseinrichtung mit der Schnittstelle elektrisch gekoppelt ist und dazu ausgebildet ist, ausschließlich aus einer an der Schnittstelle anstehenden Spannung und/oder ausschließlich aus einem über die Schnittstelle fließenden Strom eine oder mehrere Versorgungsspannungen für das radiometrische Messgerät zu erzeugen. Die Versorgungsspannung bzw. aus der Versorgungsspannung abgeleitete Spannungen/Ströme kann/können zur Versorgung sämtlicher elektrischer Komponenten des radiometrischen Messgeräts dienen.

Die Spannungsversorgungseinrichtung kann einen Spannungswandler, beispielsweise in Form eines DC/DC-Wandlers, zur Pegelwandlung aufweisen. Der Spannungswandler kann einen Aufwärts- und/oder einen Abwärtsteil aufweisen. Die vom Spannungswandler erzeugte Spannung kann beispielsweise als Versorgungsspannung für einen Halbleitersensor, beispielsweise in Form eins SiPM, dienen.

Es versteht sich, dass die Spannungsversorgungseinrichtung auch mehrere DC/DC-Wandler bzw. Spannungswandler zur Pegelwandlung aufweisen kann, beispielsweise einen Spannungswandler zum Erzeugen von Spannungen größer als 20V und einen weiteren Spannungswandler zum Erzeugen von Spannungen kleiner als 6V.

Die Schnittstelle kann eine analoge Stromschnittstelle, beispielsweise eine so genannte 4-20 mA Stromschleife sein. Diese kann z.B. nach den Namur Standards NE006 und NE043 ausgeführt sein.

Die Schnittstelle kann auch eine digitale Stromschnittstelle oder eine gemischt analoge/digitale Schnittstelle (HART-Kommunikation) sein.

Die Schnittstelle kann eine Zweileiter-Schnittstelle sein.

Das radiometrische Messgerät kann beispielsweise folgende Schnittstellen zur Prozess-Anbindung enthalten: Modbus-Schnittstelle, Profibus-Schnittstelle, HART- Schnittstelle, FOUN-DATION Fieldbus-Schnittstelle, Ethernet-Schnittstelle.

Die mindestens eine Halbleiter-Photodiode kann eine Halbleiter-Photodiode mit interner Verstärkung sein, beispielsweise eine Avalanche-Photodiode (APD) oder ein Silicon Photomultiplier (SiPM).

Die Erfindung betrifft ein radiometrisches Messgerät beispielsweise in Form eines radiometrischen Szintillationsdetektors zum Nachweis von Gamma- oder Neutronenstrahlung für die Füllstand- oder Dichtemessung in der Prozessindustrie. Das radiometrisches Messgerät umfasst einen Szintillator, eine oder mehrere Halbleiter-Fotodioden mit interner Verstärkung (APD oder SiPM) sowie eine Signalverarbeitungs- und Übertragungseinheit. Aufgrund der Eigenschaften der Halbleiterdioden kann das radiometrische Messgerät sehr energiesparend ausgeführt werden. Somit ist es möglich, das radiometrische Messgerät ausschließlich über seine Schnittstelle zu speisen, beispielsweise mit der in einer 4-20 mA Stromschleife zur Verfügung stehenden elektrischen Leistung. Das radiometrische Messgerät kann dadurch auch für Anwendungen in explosionsgefährdeten Bereichen in der Zündschutzart eigensicher ausgeführt sein und in allen Zonen einschließlich der Zone 0 eingesetzt werden.

Das radiometrische Messgerät kann eine Zerfallskompensation aufweisen, womit die Aktivitätsabnahme durch den Zerfall eines für die Messung verwendeten radioaktiven Nuklids kompensiert werden kann. Hierzu kann das radiometrische Messgerät Komponenten aufweisen, die eine Bestimmung des Datums und der Uhrzeit ermöglichen, beispielsweise eine Echtzeituhr oder einen Funkempfänger, der beispielweise zum Empfang von GPS-Signalen ausgelegt ist oder als Empfänger zum Empfang von DCF77-, MSF-, JJY- oder WWVB-Signalen.

Das radiometrische Messgerät kann einen nicht-flüchtigen Datenspeicher zum Hinterlegen von Kalibrierdaten (Applikationskalibrierdaten oder elektrische Bauteilkalibierdaten) oder Fertigungsdaten aufweisen.

Das radiometrische Messgerät kann einen oder mehrere Halbleitersensoren aufweisen, der/die sich zum direkten Nachweis von ionisierender Strahlung oder zum Nachweis von Sekundärstrahlung (beispielsweise Szintillationslicht) eignet bzw. eignen, die mittels eines oder mehrerer Szintillatoren umgewandelt wurde.

Das radiometrische Messgerät kann eine Steuereinrichtung aufweisen, welche einen oder mehrere Funktionsblöcke beinhalten kann, welche ein oder mehrere Steuersignale generieren.

Ein Funktionsblock kann beispielsweise in Abhängigkeit von der Temperatur oder charakteristischen Eigenschaften des Spektrums ein Steuersignal generieren, das zu einer Messgerätestabilisierung verwendet werden kann.

Ein weiterer Funktionsblock kann ein zweites Steuersignal zur Ansteuerung der prozesswert-übertragenden Funktionseinheit generieren.

Diese Funktionsblöcke können auch auf mehrere Steuereinheiten verteilt sein.

Die prozesswertübertragende Funktionseinheit kann ihre Information analog oder digital an den Empfänger (beispielsweise Speisetrenner, SPS bzw. Prozessleitsystem) übertragen.

Das radiometrische Messgerät kann eine Ex i Barriere zum Begrenzen von Strom, Spannung und Leistung aufweisen. Die Ex i Barriere weist die Eigenschaft auf, elektrische Energie, die im Messgerät enthalten oder gespeichert ist, im Fehlerfall abzublocken oder in Wärme umzuwandeln, so dass diese nicht an die Anschlussklemmen des Messgeräts weitergeleitet wird und ein zündfähiges Gemisch zur Explosion bringen kann. Zur Ausgestaltung der Barrieren wird auf die einschlägige Fachliteratur verwiesen.

Das radiometrische Messgerät wird im Normalbetrieb bzw. im Messbetrieb, während dessen es die Messgröße bestimmt, ausschließlich über seine Schnittstelle mit elektrischer Energie versorgt.

Das radiometrische Messgerät kann in der Zündschutzart Ex i ausgeführt sein oder diese Zündschutzart mit weiteren Zündschutzarten (z.B. Ex m) kombinieren, d.h. das radiometrische Messgerät kann in der Zündschutzart eigensicher oder als Kombination der Zündschutzart eigensicher und vergussgekapselt oder eigensicher und druckfest ausgeführt sein.

Die Schnittstelle ist eine Stromschnittstelle, wobei das radiometrische Messgerät dazu ausgebildet ist, die Messgröße mittels der Stromaufnahme des radiometrischen Messgeräts zu kodieren und/oder zu übertragen. Das radiometrische Messgerät weist mindestens einen elektrischen Energiespeicher auf, wobei der mindestens eine elektrische Energiespeicher mittels eines Ladestroms (wieder-) aufladbar ist. Der elektrische Energiespeicher kann beispielsweise ein wieder aufladbarer Energiespeicher einer Echtzeituhr des Messgeräts sein.

Weiter weist das radiometrische Messgerät einen Ladestromregler auf, der dazu ausgebildet ist, den Ladestrom in Abhängigkeit von der Messgröße einzustellen.

Das radiometrische Messgerät kann eine Real Time Clock (RTC, oder Echtzeituhr) aufweisen, beispielswiese um das für eine Zerfallskompensation benötigte Datum und die Uhrzeit zu ermitteln. Der Energiespeicher ist für diesen Fall dazu ausgebildet, die Real Time Clock mit elektrischer Energie zu versorgen, wenn (sobald) über die Schnittstelle keine Energie (mehr) zur Verfügung gestellt wird. Mit anderen Worten dient der Energiespeicher als Pufferspeicher für die Real Time Clock.

Das radiometrische Messgerät weist mindestens einen einstellbaren Ballast-Widerstand (Bürde) auf, mittels dessen die Stromaufnahme des radiometrischen Messgeräts steuerbar ist Der Ladestromregler ist dazu ausgebildet, einen Widerstandswert des mindestens einen Ballast-Widerstands in Abhängigkeit von der Messgröße einzustellen, d.h. der Widerstandswert kann als Stellgröße des Ladestromreglers dienen.

Der Ladestromregler ist dazu ausgebildet, den Widerstandswert des mindestens einen Ballast-Widerstands in Abhängigkeit von der Messgröße derart einzustellen, dass ein Strom durch den mindestens einen Ballast-Widerstand minimal und der Ladestrom maximal wird, solange eine Speicher- bzw. Ladekapazität des elektrischen Energiespeichers noch nicht erschöpft ist. Falls die Speicher- bzw. Ladekapazität des elektrischen Energiespeichers erschöpft ist, kann der Ladestrom auf Null eingestellt werden und überschüssige elektrische Energie kann in dem mindestens einen Ballast-Widerstand in Wärmeenergie umgewandelt werden.

Die Signalauswerteeinheit kann dazu ausgebildet sein, das Ermitteln der Messgröße im Hinblick auf mögliche Fehler zu überprüfen, wobei das radiometrische Messgerät dazu ausgebildet ist, im Fehlerfall solche Baugruppen des radiometrischen Messgeräts zu deaktivieren, die zum Ermitteln der Messgröße vorgesehen sind.

Die Erfindung wird nachfolgend unter Bezugnahme auf die Zeichnung detailliert beschrieben. Hierbei zeigt:
- Fig. 1: schematisch ein radiometrisches Messsystem mit einem erfindungsgemäßen radiometrischen Messgerät,
- Fig. 2: schematisch ein radiometrisches Messgerät gemäß einer weiteren Ausführungsform und
- Fig. 3: schematisch ein radiometrisches Messgerät gemäß einer weiteren Ausführungsform.

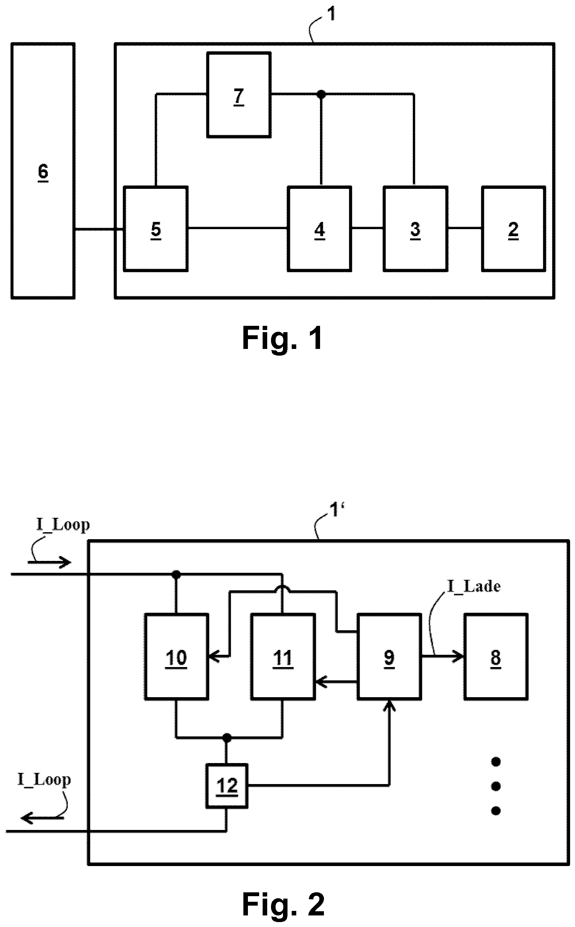

Fig. 1 zeigt schematisch ein radiometrisches Messsystem mit einem radiometrischen Messgerät 1, das mit einem Empfänger 6 über seine 4-20 mA Stromschnittstelle 5 gekoppelt ist.

Das radiometrische Messgerät 1 weist herkömmlich einen Szintillator 2 auf. Weiter ist eine Halbleiter-Photodiode 3 in Form eines SiPM vorgesehen, wobei der SiPM 3 optisch mit dem Szintillator 2 gekoppelt ist. Der SiPM 3 wandelt die im Szintillator erzeugten Lichtimpulse in elektrische Stromimpulse um.

Eine Signalauswerteeinheit 4 ist mit dem SiPM 3 elektrisch gekoppelt. Die Signalauswerteeinheit 4 ist dazu ausgebildet, in Abhängigkeit von einem Messsignal, das von dem SiPM 3 erzeugt wird, fortlaufend eine Messgröße beispielsweise in Form eines Füllstands zu ermitteln. Die Signalauswerteeinheit 4 kann weiter beispielsweise eine Biasspannung des SiPM 3 regeln, eine ordnungsgemäße Funktion des SiPMs 3 überwachen, usw.

Das radiometrische Messgerät 1 ist mittels seiner Schnittstelle 5 mit dem Empfänger 6 zum Datenaustausch gekoppelt, d.h. die von dem radiometrischen Messgerät 1 fortlaufend und unterbrechungsfrei ermittelten Messwerte bzw. Messgrößen werden über die Schnittstelle 5 fortlaufend und unterbrechungsfrei zum Empfänger 6 übertragen. Hinsichtlich der grundsätzlichen Funktion der 4-20 mA Stromschnittstelle sei auf die einschlägige Fachliteratur verwiesen.

Der Empfänger 6 stellt herkömmlich elektrische Schnittstellenenergie mittels eines eingeprägten Stroms bzw. einer eingeprägten Spannung zur Verfügung. Auch insoweit sei auf die die einschlägige Fachliteratur zur 4-20 mA Schnittstelle verwiesen.

Das radiometrische Messgerät 1 weist eine Spannungsversorgungseinrichtung 7 auf, die mit der Schnittstelle 5 elektrisch gekoppelt ist. Das radiometrische Messgerät 1 wird ausschließlich mittels der Spannungsversorgungseinrichtung 7 mit Spannung versorgt. Die Spannungsversorgungseinrichtung 7 entnimmt einen benötigten Anteil der zur Verfügung stehenden Schnittstellenenergie von der Schnittstelle 5 und stellt diesen Anteil als Betriebsenergie in Form einer oder mehrerer Versorgungsspannungen zur Verfügung. Weitere Energiequellen stehen der Spannungsversorgungseinrichtung 7 nicht zur Verfügung, d.h. das radiometrische Messgerät 1 wird ausschließlich über seine Schnittstelle 5 mit Energie versorgt.

Vorliegend versorgt die Spannungsversorgungseinrichtung 7 exemplarisch die Signalauswerteeinheit 4 und den SiPM 3 mit zu deren Betrieb notwendigen Spannungen/Strömen.

Die Spannungsversorgungseinrichtung 7 kann zur Spannungswandlung bzw. Pegelanpassung einen oder mehrere DC/DC-Wandler, beispielsweise in Form eines/von Boost-Wandlers/n, aufweisen, der/die aus einer an der Schnittstelle 5 anstehenden Spannung eine Spannung mit einem geeigneten Pegel erzeugt/en.

Die Schnittstelle 5 kann eine so genannte Barriere aufweisen, die aus explosionsschutztechnischen Gründen erforderlich sein kann. Die Barriere trennt intern eventuell vorhandene Energiespeicher vom eigensicheren Loopkreis ab. Die Barriere kann bei nicht eigensicheren Geräten entfallen.

Die Schnittstelle 5 kann ein so genanntes Prozessinterface aufweisen. Das Prozessinterface dient zur Umsetzung des ermittelten Messwertes, beispielsweise Impulse pro Sekunde, bzw. der ermittelten Messgröße, beispielsweise Füllstand, Dichte und/oder Massenstrom, in eine an den Empfänger zu übermittelnde elektrische Information, beispielsweise 4-20 mA Loopstrom oder Busdaten, wie Profibus o.ä.

Die Schnittstelle 5 kann weiter ein Modem aufweisen. Mittels des Modems können beispielsweise Kommunikationsdaten (z.B. Bell 202 zur HART- Kommunikation) übermitteln werden.

Zum Puffern der aus der Schnittstelle entnommenen Energie kann ein optionaler Energiespeicher vorgesehen sein.

Es versteht sich, dass die Schnittstelle 5 auch eine Feldbusschnittstelle sein kann, beispielsweise eine Profibus-Schnittstelle.

Die wesentlichen Vorteile des erfindungsgemäßen radiometrischen Messgeräts 1 liegen in dem möglichen Einsatz bis in die Ex-Zone 0 und/oder in der Installation als Zweileitergerät. Ein Benutzer benötigt nur noch zwei Leitungen zum Feldgerät, da die Zuführung einer getrennten Speisespannung für das radiometrische Messgerät 1 entfällt. Das hierfür im Ex-Bereich benötigte armierte Kabel kann ebenfalls entfallen. Bei explosionsgeschützten Sonden der Zündschutzart eigensicher kann die aufwändige druckfeste Kapselung des radiometrischen Messgeräts 1 entfallen. Dadurch ergibt sich ein erheblicher Kostenvorteil.

Fig. 2 zeigt schematisch ein radiometrisches Messgerät 1' gemäß einer weiteren Ausführungsform. In Fig. 2 ist lediglich ein Teil des radiometrischen Messgeräts 1' dargestellt. Die Komponenten 2, 3, 4, 5 und 7 sind selbstverständlich, obwohl aus Gründen der Übersichtlichkeit nicht dargestellt, ebenfalls vorhanden. Insoweit sei auf die Ausführungen zu Fig. 1 verwiesen.

Die Schnittstelle 5, siehe auch Fig. 1, ist bei dieser Ausführungsform eine Stromschnittstelle, wobei das radiometrische Messgerät 1' dazu ausgebildet ist, die Messgröße mittels einer Stromaufnahme I_Loop des radiometrischen Messgeräts 1' an den Empfänger 6 zu übertragen.

Das radiometrische Messgerät 1' weist einen elektrischen Energiespeicher 8 auf, der mittels eines Ladestroms I_Lade aufladbar ist. Das radiometrische Messgerät 1' weist weiter einen Ladestromregler 9 auf, der dazu ausgebildet ist, den Ladestrom I_Lade in Abhängigkeit von der zu übertragenden Messgröße einzustellen.

Das radiometrische Messgerät 1' weist zwei parallel geschaltete Ballast-Widerstände 10, 11 auf, mittels derer die Stromaufnahme I_Loop des radiometrischen Messgeräts 1' steuerbar bzw. beeinflussbar ist. Der zweite Ballast-Widerstand 11 ist im fehlerfreien Fall hochohmig und dient lediglich dazu, unter bestimmten Fehlerbedingungen einen zweiten Abschaltweg zur Verfügung zu stellen, der einen Fehlerstrom bewirken kann, um einen sicheren Zustand herzustellen. Insoweit sei auch auf die EP 1 860 513 A2 verwiesen.

Da jedoch der zweite Abschaltweg nur bei 24 mA Loopstrom aktiv sein muss, werden sämtliche Schaltungsteile des zweiten Abschaltwegs nur dann aktiviert, wenn der 2. Abschaltweg benötigt wird. Dies führt zu einer Energieeinsparung.

Der Ladestromregler 9 ist dazu ausgebildet, einen Widerstandswert des ersten Ballast-Widerstands 10 in Abhängigkeit von der zu übertragenden Messgröße derart einzustellen, dass ein Strom durch den ersten Ballast-Widerstand 10 minimal und der Ladestrom I_Lade maximal wird.

Ein Shunt- oder Messwiderstand 12 dient zur Messung der Stromaufnahme I_Loop des radiometrischen Messgeräts 1', wobei der derart gemessene Strom im Stromregler 9 zur Regelung ausgewertet wird.

Der Strom I_Loop repräsentiert den aktuellen gemessenen Wert der Messgröße. Der Strom I_Loop darf einen vorgegebenen Minimalwert nicht unterschreiten, da das Gerät 1' mit diesem Strom versorgt wird. Wird für die Übertragung bzw. Signalisierung eines Werts einer Messgröße ein Strom erforderlich, der größer als dieser Minimalwert (vom Messgerät 1' selber benötigter Betriebsstrom) ist, wird dieser mittels des Ballast-Widerstands 10, der beispielsweise als aktives Bauelement z.B. in Form eines Bipolar-Transistors und/oder eines Feldeffekt-Transistors ausgebildet sein kann, erzeugt, wodurch Verlustleistung erzeugt wird, die nicht zur Versorgung des Messgeräts 1' zur Verfügung steht.

Mittels des Stromreglers 9 wird nun der Strom durch den Ballast-Widerstand 10 auf ein für die ordnungsgemäße Funktion erforderliches Minimum reduziert, beispielswiese auf 0,8 mA für die HART-Kommunikation. Der überschüssige Strom wird als Ladestrom I_Lade dem elektrischen Energiespeicher 8 zugeführt. Falls der Energiespeicher 8 die Energie nicht mehr aufnehmen kann, senkt der Ballast-Widerstand 10 den erforderlichen Strom. Der elektrische Energiespeicher 8 kann beispielsweise ein Energiespeicher einer Echtzeituhr sein.

Steht überschüssige Energie im Messgerät 1' zur Verfügung, so kann diese beispielsweise für das Laden des für die Pufferung der Echtzeituhr verwendeten Energiespeichers 8 eingesetzt werden.

Außerdem ist es möglich, dass das radiometrische Messgerät 1' ein hier nicht gezeigtes elektrisches Anzeigeelement, beispielsweise in Form eines Displays, für einen Benutzer und optional zusätzlich ein hier nicht gezeigtes Eingabeelement, beispielsweise in Form einer Tastatur z.B. mit drei, vier, fünf, sechs oder mehr Tasten, für diesen aufweisen kann. Das Display bzw. eine Hintergrundbeleuchtung dessen kann kontinuierlich aktiviert sein. Alternativ kann das Display bzw. dessen Hintergrundbeleuchtung die meiste Zeit deaktiviert sein und bei Bedarf mittels Tastenbetätigung für einen bestimmten Zeitraum aktiviert werden. Grundsätzlich kann überschüssige Energie im Messgerät 1' gepuffert werden, damit bei Benutzerinteraktion eine Hintergrundbeleuchtung des Displays oder das Display selbst aktiviert werden kann.

Die Signalauswerteeinheit 4 weist eine Diagnoseeinrichtung auf, die dazu ausgebildet ist, das Ermitteln der Messgröße im Hinblick auf mögliche Fehler zu überprüfen, wobei das radiometrische Messgerät dazu ausgebildet ist, im Fehlerfall solche Baugruppen, vorliegend exemplarisch die Halbleiter-Photodiode 3, des radiometrischen Messgeräts zu deaktivieren, die zum Ermitteln der Messgröße vorgesehen sind.

Wenn die Signalauswerteeinheit 4 bzw. deren Diagnoseeinrichtung einen Fehler erkennt, so sollte das Messgerät nach Namur NE 43 einen Loopstrom I_Loop von < 3,6 mA generieren. Hierdurch sinkt die dem Messgerät zur Verfügung stehende Energie weiter ab. Aufgrund der Eigenenergieaufnahme des Messgeräts ist dies gegebenenfalls nicht möglich. Deshalb ist das Messgerät dazu ausgebildet, einzelne Energieverbraucher bzw. Funktionsbaugruppen des Messgeräts 1, 1' abzuschalten.

Erfindungsgemäß findet eine Ermittlung der Messgröße im Fehlerfall nicht mehr statt, da in Frage zu stellen ist, ob die Messgröße aufgrund des Fehlers noch korrekt ermittelt werden kann. Hierdurch ergibt sich die Möglichkeit, solche Baugruppen des radiometrischen Messgeräts zu deaktivieren, die zum Ermitteln der Messgröße vorgesehen sind. Es können dies beispielsweise die Halbleiter-Photodiode 2 bzw. deren Spannungsversorgung, Operationsverstärker, Komparatoren einschließlich einer analogen Spannungsversorgung sein, die abzuschalten sind. Somit reduziert sich der Energieverbrauch des Messgeräts signifikant, wodurch dann ein Loopstrom I_Loop von < 3,6 mA signalisiert werden kann.

Im Übrigen entspricht die in Fig. 2 gezeigte Ausführungsform der in Fig. 1 gezeigten, so dass diesbezüglich auch auf die Ausführungen und Merkmale der in Fig. 1 gezeigten Ausführungsform Bezug genommen wird, um Wiederholungen zu vermeiden.

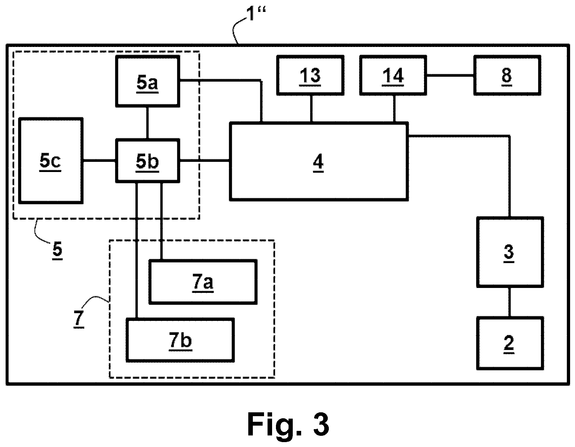

Fig. 3 zeigt schematisch ein radiometrisches Messgerät 1" gemäß einer weiteren Ausführungsform.

Die Schnittstelle 5 weist bei dieser Ausführungsform ein Modem 5a, eine Prozessschnittstelle 5b und eine Ex i Barriere 5c auf.

Weiter ist der Signalauswerteeinheit 4 ein nicht-flüchtiger Datenspeicher 13 zugeordnet, der zum Hinterlegen von Kalibrierdaten (Applikationskalibrierdaten oder elektrische Bauteilkalibierdaten) oder Fertigungsdaten dient.

Weiter ist der Signalauswerteeinheit 4 eine Real Time Clock 14 zugeordnet, wobei der elektrische Energiespeicher 8 dazu ausgebildet ist, die Real Time Clock 14 dann mit elektrischer Energie zu versorgen, wenn über die Schnittstelle 5 keine elektrische Energie zur Verfügung gestellt wird. Die Schnittstelle 5 kann wie die in Fig. 2 gezeigte Stromschnittstelle ausgeführt sein, d.h. den Ladestromregler 9, die parallel geschalteten Ballast-Widerstände 10, 11 und den Shunt- oder Messwiderstand 12 aufweisen.

Die Signalauswerteeinheit 4 führt eine Zerfallskompensation durch, wobei die Real Time Clock 14 unter anderem dazu dient, ein für eine Zerfallskompensation benötigtes Datum und eine Uhrzeit zu ermitteln.

Im Übrigen entspricht die in Fig. 3 gezeigte Ausführungsform der in Fig. 1 bzw. Fig. 2 gezeigten, so dass diesbezüglich auch auf die Ausführungen und Merkmale der in den Figuren 1 bzw. 2 gezeigten Ausführungsform Bezug genommen wird, um Wiederholungen zu vermeiden.

## Patentansprüche

1. Radiometrisches Messgerät (1, 1', 1"), aufweisend:
- einen Szintillator (2),
- mindestens eine Halbleiter-Photodiode (3), wobei die mindestens eine Halbleiter-Photodiode (3) optisch mit dem Szintillator (2) gekoppelt ist,
- eine Signalauswerteeinheit (4), die mit der mindestens einen Halbleiter-Photodiode (3) elektrisch gekoppelt ist und die dazu ausgebildet ist, in Abhängigkeit von einem Messsignal, das mittels der mindestens einen Halbleiter-Photodiode (3) erzeugt ist, eine Messgröße zu ermitteln,
- eine Schnittstelle (5), wobei das radiometrische Messgerät (1, 1', 1") mittels der Schnittstelle (5) mit mindestens einem Empfänger (6) zum Datenaustausch koppelbar ist,
- wobei das radiometrische Messgerät (1, 1', 1") dazu ausgebildet ist, ausschließlich über seine Schnittstelle (5) mit elektrischer Energie versorgt zu werden,
- wobei die Schnittstelle (5) eine Stromschnittstelle ist, wobei das radiometrische Messgerät (1, 1', 1") dazu ausgebildet ist, die Messgröße mittels einer Stromaufnahme des radiometrischen Messgeräts (1, 1', 1") zu kodieren,
- mindestens einen elektrischen Energiespeicher (8), der mittels eines Ladestroms (I_Lade) aufladbar ist, und
- einen Ladestromregler (9), der dazu ausgebildet ist, den Ladestrom (I_Lade) in Abhängigkeit von der Messgröße einzustellen, und
- mindestens einen einstellbaren Ballast-Widerstand (10, 11), mittels dessen die Stromaufnahme (I_Loop) des radiometrischen Messgeräts (1, 1', 1") steuerbar ist,
- wobei der Ladestromregler (9) dazu ausgebildet ist, den Widerstandswert des mindestens einen Ballast-Widerstands (10, 11) in Abhängigkeit von der Messgröße derart einzustellen, dass ein Strom durch den mindestens einen Ballast-Widerstand (10, 11) minimal und der Ladestrom (I_Lade) maximal wird.

2. Radiometrisches Messgerät (1, 1', 1") nach Anspruch 1, **dadurch gekennzeichnet, dass**
- das radiometrische Messgerät (1, 1', 1") eine Spannungsversorgungseinrichtung (7) aufweist, wobei die Spannungsversorgungseinrichtung (7) mit der Schnittstelle (5) elektrisch gekoppelt ist und dazu ausgebildet ist, aus einer an der Schnittstelle (5) anstehenden Spannung und/oder aus einem über die Schnittstelle (5) fließenden Strom eine Versorgungsspannung für das radiometrische Messgerät (1, 1', 1") zu erzeugen.

3. Radiometrisches Messgerät (1, 1', 1") nach Anspruch 2, **dadurch gekennzeichnet, dass**
- die Spannungsversorgungseinrichtung (7) einen Spannungswandler aufweist.

4. Radiometrisches Messgerät (1, 1', 1") nach einem der Ansprüche 1 bis 3, **dadurch gekennzeichnet, dass**
- die Schnittstelle (5) eine analoge Stromschnittstelle oder eine digitale Stromschnittstelle ist.

5. Radiometrisches Messgerät (1, 1', 1") nach einem der vorhergehenden Ansprüche, **dadurch gekennzeichnet, dass**
- die Schnittstelle (5) eine Zweileiter-Schnittstelle ist.

6. Radiometrisches Messgerät (1, 1', 1") nach einem der vorhergehenden Ansprüche, **dadurch gekennzeichnet, dass**
- die mindestens eine Halbleiter-Photodiode (3) eine Halbleiter-Photodiode mit interner Verstärkung ist.

7. Radiometrisches Messgerät (1, 1', 1") nach einem der vorhergehenden Ansprüche, **dadurch gekennzeichnet, dass**
- die mindestens eine Halbleiter-Photodiode (3) eine Avalanche-Photodiode oder ein Silicon Photomultiplier ist.

8. Radiometrisches Messgerät (1, 1', 1") nach einem der vorhergehenden Ansprüche, **dadurch gekennzeichnet, dass** das radiometrische Messgerät (1, 1', 1") aufweist:
- eine Real Time Clock (14),
- wobei der elektrische Energiespeicher (8) dazu ausgebildet ist, die Real Time Clock (14) dann mit elektrischer Energie zu versorgen, wenn über die Schnittstelle (5) keine elektrische Energie zur Verfügung gestellt wird.

9. Radiometrisches Messgerät (1, 1', 1") nach einem der vorhergehenden Ansprüche, **dadurch gekennzeichnet, dass**
- die Signalauswerteeinheit (4) dazu ausgebildet ist, das Ermitteln der Messgröße im Hinblick auf mögliche Fehler zu überprüfen, wobei das radiometrische Messgerät (1, 1', 1") dazu ausgebildet ist, im Fehlerfall solche Baugruppen (3) des radiometrischen Messgeräts (1, 1', 1") zu deaktivieren, die zum Ermitteln der Messgröße vorgesehen sind.

10. Radiometrisches Messgerät (1, 1', 1") nach einem der vorhergehenden Ansprüche, **dadurch gekennzeichnet, dass**
- die Signalauswerteeinheit (4) dazu ausgebildet ist, fortlaufend und messpausenfrei die Messgröße zu ermitteln.

## Claims

1. Radiometric measuring device (1, 1', 1"), comprising:
- a scintillator (2),
- at least one semiconductor photodiode (3), wherein the at least one semiconductor photodiode (3) is optically coupled to the scintillator (2),
- a signal evaluation unit (4) which is electrically coupled to the at least one semiconductor photodiode (3) and is designed to determine a measurement variable on the basis of a measurement signal which is generated by means of the at least one semiconductor photodiode (3),
- an interface (5), wherein the radiometric measuring device (1, 1', 1") is able to be coupled by means of the interface (5) to at least one receiver (6) for the purpose of interchanging data,
- wherein the radiometric measuring device (1, 1', 1") is designed to be supplied with electrical energy solely via its interface (5),
- wherein the interface (5) is a current interface, wherein the radiometric measuring device (1, 1', 1") is designed to code the measurement variable by means of a current consumption of the radiometric measuring device (1, 1', 1"),
- at least one electrical energy store (8) which can be charged by means of a charging current (I_Lade), and
- a charging current controller (9) which is designed to set the charging current (I_Lade) on the basis of the measurement variable, and
- at least one adjustable ballast resistor (10, 11) which can be used to control the current consumption (I_Loop) of the radiometric measuring device (1, 1', 1"),
- wherein the charging current controller (9) is designed to set a resistance value of the at least one ballast resistor (10, 11) on the basis of the measurement variable such that a current through the at least one ballast resistor (10, 11) is minimum and the charging current (I_Lade) is maximum.

2. Radiometric measuring device (1, 1', 1") according to claim 1, **characterized in that**
- the radiometric measuring device (1, 1', 1") has a voltage supply device (7), wherein the voltage supply device (7) is electrically coupled to the interface (5) and is designed to generate a supply voltage for the radiometric measuring device (1, 1', 1") from a voltage present at the interface (5) and/or from a current flowing via the interface (5).

3. Radiometric measuring device (1, 1', 1") according to claim 2, **characterized in that**
- the voltage supply device (7) includes a voltage converter.

4. Radiometric measuring device (1, 1', 1") according to any of claims 1 to 3, **characterized in that**
- the interface (5) is an analog current interface or a digital current interface.

5. Radiometric measuring device (1, 1', 1") according to any of the preceding claims, **characterized in that**
- the interface (5) is a two-wire interface.

6. Radiometric measuring device (1, 1', 1") according to any of the preceding claims, **characterized in that**
- the at least one semiconductor photodiode (3) is a semiconductor photodiode with internal amplification.

7. Radiometric measuring device (1, 1', 1") according to any of the preceding claims, **characterized in that**
- the at least one semiconductor photodiode (3) is an avalanche photodiode or a silicon photomultiplier.

8. Radiometric measuring device (1, 1', 1") according to any of the preceding claims, **characterized in that** the radiometric measuring device (1, 1', 1") includes:
- a real-time clock (14),
- wherein the electrical energy store (8) is designed to supply the real-time clock (14) with electrical energy when no electrical energy is provided via the interface (5).

9. Radiometric measuring device (1, 1', 1") according to any of the preceding claims, **characterized in that**
- the signal evaluation unit (4) is designed to check the determination of the measurement variable for possible faults, wherein the radiometric measuring device (1, 1', 1") is designed, in the event of a fault, to deactivate those assemblies (3) of the radiometric measuring device (1, 1', 1") which are provided for determining the measurement variable.

10. Radiometric measuring device (1, 1', 1") according to any of the preceding claims, **characterized in that**
- the signal evaluation unit (4) is designed to determine the measurement variable continually and without a measurement pause.

## Revendications

1. Appareil de mesure radiométrique (1, 1', 1"), comprenant :
- un scintillateur (2),
- au moins une photodiode à semiconducteur (3), l'au moins une photodiode à semiconducteur (3) étant couplée optiquement avec le scintillateur (2),
- une unité d'interprétation de signal (4), qui est connectée électriquement à l'au moins une photodiode à semiconducteur (3) et qui est configurée pour déterminer une grandeur mesurée en fonction d'un signal de mesure qui est généré au moyen de l'au moins une photodiode à semiconducteur (3),
- une interface (5), l'appareil de mesure radiométrique (1, 1', 1") pouvant être connecté au moyen de l'interface (5) à au moins un récepteur (6),
- l'appareil de mesure radiométrique (1, 1', 1") étant configuré pour être alimenté en énergie exclusivement par le biais de son interface (5),
- l'interface (5) étant une interface de courant, l'appareil de mesure radiométrique (1, 1', 1") étant configuré pour coder la grandeur mesurée au moyen d'une consommation de courant par l'appareil de mesure radiométrique (1, 1', 1"),
- au moins un accumulateur d'énergie électrique (8), qui peut être chargé au moyen d'un courant de charge (I_Lade), et
- un régulateur de courant de charge (9), qui est configuré pour régler le courant de charge (I_Lade) en fonction de la grandeur mesurée, et
- au moins une résistance ballast (10, 11) réglable, au moyen de laquelle peut être commandée la consommation de courant (I_Loop) de l'appareil de mesure radiométrique (1, 1', 1"),
- le régulateur de courant de charge (9) étant configuré pour régler la valeur de résistance de l'au moins une résistance ballast (10, 11) en fonction de la grandeur de mesure de telle sorte qu'un courant à travers l'au moins une résistance ballast (10, 11) est minimal et le courant de charge (I_Lade) maximal.

2. Appareil de mesure radiométrique (1, 1', 1") selon la revendication 1, **caractérisé en ce que**
- l'appareil de mesure radiométrique (1, 1', 1") possède un dispositif d'alimentation en tension électrique (7), le dispositif d'alimentation en tension électrique (7) étant connecté électriquement à l'interface (5) et étant configuré pour générer une tension d'alimentation pour l'appareil de mesure radiométrique (1, 1', 1") à partir d'une tension présente au niveau de l'interface (5) et/ou à partir d'un courant qui s'écoule par le biais de l'interface (5).

3. Appareil de mesure radiométrique (1, 1', 1") selon la revendication 2, **caractérisé en ce que**
- le dispositif d'alimentation en tension électrique (7) possède un convertisseur de tension.

4. Appareil de mesure radiométrique (1, 1', 1") selon l'une des revendications 1 à 3, **caractérisé en ce que**
- l'interface (5) est une interface analogique ou une interface numérique.

5. Appareil de mesure radiométrique (1, 1', 1") selon l'une des revendications précédentes, **caractérisé en ce que**
- l'interface (5) est une interface à deux conducteurs.

6. Appareil de mesure radiométrique (1, 1', 1") selon l'une des revendications précédentes, **caractérisé en ce que**
- l'au moins une photodiode à semiconducteur (3) est une photodiode à semiconducteur avec amplification interne.

7. Appareil de mesure radiométrique (1, 1', 1") selon l'une des revendications précédentes, **caractérisé en ce que**
- l'au moins une photodiode à semiconducteur (3) est une photodiode à avalanche ou un photomultiplicateur au silicium.

8. Appareil de mesure radiométrique (1, 1', 1") selon l'une des revendications précédentes, **caractérisé en ce que** l'appareil de mesure radiométrique (1, 1', 1") possède :
- une horloge à temps réel (14),
- l'accumulateur d'énergie électrique (8) étant configuré pour alimenter l'horloge à temps réel (14) en énergie électrique lorsqu'aucune énergie électrique n'est mise à disposition par le biais de l'interface (5).

9. Appareil de mesure radiométrique (1, 1', 1") selon l'une des revendications précédentes, **caractérisé en ce que**
- l'unité d'interprétation de signal (4) est configurée pour vérifier la détermination de la grandeur mesurée en vue d'y détecter d'éventuelles erreurs, l'appareil de mesure radiométrique (1, 1', 1") étant configuré pour, en cas d'erreur, désactiver les sous-ensembles (3) de l'appareil de mesure radiométrique (1, 1', 1") qui sont prévus pour la détermination de la grandeur mesurée.

10. Appareil de mesure radiométrique (1, 1', 1") selon l'une des revendications précédentes, **caractérisé en ce que**
- l'unité d'interprétation de signal (4) est configurée pour déterminer la grandeur mesurée continuellement et sans pauses de mesure.
